# EUROPEAN PATENT APPLICATION

(11) **EP 3 220 098 A1**
(43) Date of publication of application: **20.09.2017**
(21) Application number: 17158096.2
(22) Date of filing: 27.02.2017
(51) Int. Cl.: G01B 5/02, G06T 19/00, G06F 3/01, G06F 3/03, G01B 5/004

(54) **DIMENIONAL MEASUREMENT IN AUGMENTED REALITY**

(30) Priority: 16.03.2016 JP 2016053160
(71) Applicant: Fujitsu Limited, Kanagawa 211-8588 (JP)
(72) Inventor: TENMA, Tsukasa, Kanagawa 211-8588 (JP); AKAHOSHI, Ryusuke, Kanagawa 211-8588 (JP); MORIMOTO, Mari, Kanagawa 211-8588 (JP); ARITA, Yuichi, Kanagawa 211-8588 (JP)
(74) Representative: Hoffmann Eitle

(57) **Abstract**

There is provided a three-dimensional measurement program that causes a computer to execute a procedure including: storing, on a memory, information for representing a correspondence between a reference position of a real first measurement device that is present in a predetermined space, and a reference position of a virtual second measurement device that is three-dimensionally visualized in the predetermined space and is able to measure a virtual object that is three-dimensionally visualized in the predetermined space; calculating two end positions of the virtual second measurement device corresponding to two end positions of the real first measurement device applied to the virtual object, by referencing the information stored on the memory; calculating a distance between the two ends of the virtual second measurement device, based on the two end positions of the virtual second measurement device calculated; and displaying, on a predetermined device, the distance calculated.

## Description

### FIELD

The embodiment discussed herein is related to a three-dimensional measurement system and a three-dimensional measurement method.

### BACKGROUND

Techniques have been available to visualize an object created through three-dimensional computer aided design (CAD). For example, two methods have been used to measure the length of a visualized object. In a first method, a measurement point is specified by moving a pointer to a location of a virtual object for measurement using a device, such as a mouse, a distance across the virtual object is calculated, and then measurement results are displayed. In a second method, a measurement device, such as a tape measure is overlaid on a visualized virtual object to check the scale of the tape measure.

Japanese Laid-open Patent Publication No. 11-25290 discloses a visualization technique. According to the disclosure, a human model is displayed in a three-dimensional simulation space, and a distance between any two points in the simulation space is measured by moving the human model. Along with the motion of the human model, an expandable measure is displayed on a real-time basis.

Japanese Laid-open Patent Publication No. 10-170227 discloses a technique of combining multiple images that are output from a stereo camera. The images are captured from different points of view by the stereo camera and have an overlapping field of vision. More specifically, according to the disclosure, a magnification and parallax of a measure serving as a reference in measuring an object are calculated in response to parallax between multiple corresponding points on captured multiple images in an object region, multiple measure images are generated in accordance with the calculated magnification and parallax, and the measure images and captured multiple images are combined.

Japanese Laid-open Patent Publication No. 6-241754 discloses another visualization technique. According to the disclosure, a real object is photographed using a three-dimensional camera that switches between left and right lens systems with a predetermined period, and a reproduced image of the object is observed through glasses that have left and right liquid-crystal shutters that are switched in synchronization with the switching period of the three-dimensional camera. More specifically, position coordinates of each location in a virtual object presented in a virtual space are detected by specifying each location in the virtual object, and detected position coordinate data and an imaging magnification are input to calculate dimensions of the real object.

Japanese Laid-open Patent Publication No. 8-179883 discloses a technique of specifying a direction of depth using a three-dimensional mouse. Japanese Laid-open Patent Publication No. 8-211979 discloses a hand-gesture input device that inputs information by inputting a hand trajectory. In the disclosed hand-gesture input device, a charge-coupled device (CCD) camera inputs information of a hand motion therein, position coordinates of the hand are detected from the input information, a change in the shape of the hand is determined from the input information, and detected input position coordinates are thus input in an input mode responsive to the determination results.

### SUMMARY

According, it is an object in one aspect of the invention to measure a distance between two points on a measurement target by performing an intuitive operation.

According to an aspect of the invention, a three-dimensional measurement program that causes a computer to execute a procedure, the procedure includes: storing, on a memory, information for representing a correspondence between a reference position of a real first measurement device that is present in a predetermined space, and a reference position of a virtual second measurement device that is three-dimensionally visualized in the predetermined space and is able to measure a virtual object that is three-dimensionally visualized in the predetermined space; calculating two end positions of the virtual second measurement device corresponding to two end positions of the real first measurement device applied to the virtual object, by referencing the information stored on the memory; calculating a distance between the two ends of the virtual second measurement device, based on the two end positions of the virtual second measurement device calculated; and displaying, on a predetermined device, the distance calculated.

### BRIEF DESCRIPTION OF DRAWINGS

FIG. 1 illustrates an operation example of a digital mockup apparatus of an embodiment;
FIG. 2 illustrates a three-dimensional measurement system;
FIG. 3 illustrates a measurement example when a three-dimensional display is viewed by multiple persons;
FIG. 4 is a block diagram illustrating a hardware configuration of a digital mockup device;
FIG. 5 is a block diagram illustrating a functional configuration of the three-dimensional measurement system;
FIG. 6 illustrates a first example of three-dimensional (3D) data;
FIG. 7 illustrates a second example of the 3D data;
FIG. 8 illustrates a configuration example of an initial position of a real tape measure;
FIG. 9 illustrates a configuration example of an initial position of a virtual tape measure;
FIG. 10 illustrates a measurement example by the real tape measure;
FIG. 11 illustrates a position example of two ends of the real tape measure;
FIG. 12 illustrates a position example of two ends of the virtual tape measure;
FIG. 13 illustrates a layout example of the shape of a scale portion;
FIG. 14 illustrates a production example of the shape of the virtual tape measure;
FIG. 15A through FIG. 15F illustrate shape attribute examples;
FIG. 16 illustrates an example in which an above-edge point is specified as a shape attribute;
FIG. 17 illustrates an example in which a point of passage is specified;
FIG. 18 illustrates an example in which measurement results are displayed on the real tape measure;
FIG. 19 illustrates an example in which the measurement results are displayed on a wearable device;
FIG. 20 is a flowchart illustrating a measurement process by the 3D measurement system;
FIG. 21 is a continuation of the flowchart of FIG. 20;
FIG. 22 is a continuation of the flowchart of FIG. 21; and
FIG. 23 is a continuation of the flowchart of FIG. 22.

### DESCRIPTION OF EMBODIMENT

In the related art, intuitively specifying a measurement point on a visualized measurement target is difficult because an operation to move a pointer of a device, such as a mouse, in the direction of depth is difficult.

A technique of an embodiment that enables a distance between two points on a measurement target to be measured by an intuitive operation is described in detail with reference to the attached drawings.

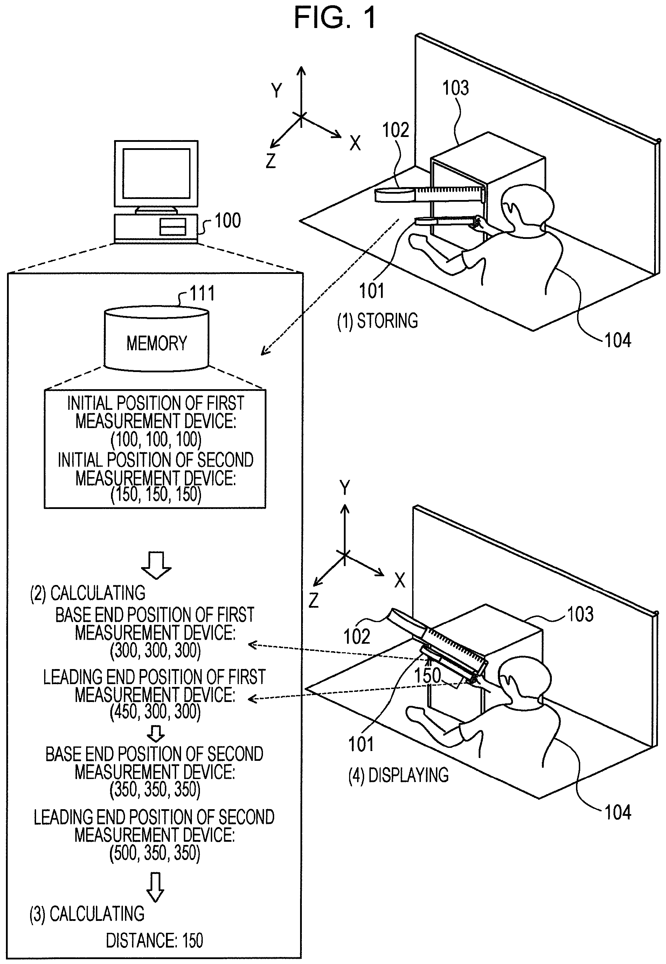

FIG. 1 is an operation example of a digital mockup apparatus 100 of the embodiment. The digital mockup device 100 is a computer or a control device that visualizes a virtual object 103 produced in a predetermined space through a three-dimensional computer aided design (CAD), and measures the visualized virtual object 103.

The predetermined space is a real space, and is defined in the three-dimensional orthogonal coordinate system having X, Y, and Z axes. The object 103 may be a product, a component, a prototype of the product, a prototype of the component, or a mockup of a building.

Two methods have been available to measure a visualized virtual object in the related art. In a first method, a measurement point is specified by moving a pointer to a location of a virtual object for measurement using a device, such as a mouse, a distance across the virtual object is calculated, and then measurement results are displayed. In a second method, a measurement device, such as a tape measure is overlaid on a visualized virtual object to check the scale of the tape measure.

In the first method, a user may intuitively move the pointer of the device, such as a mouse, in two directions, such as a vertical direction or a horizontal direction. However, the user has difficulty in moving the pointer in a direction of depth. The user has also difficulty in specifying the measurement point with respect to the object 103 that is a visualized measurement target. As described above, the method of specifying the direction of depth using a three-dimensional mouse is available in the related art. However, since a particular operation to specify the direction of depth is to be used, it is difficult for the user to intuitively and quickly specify the measurement point.

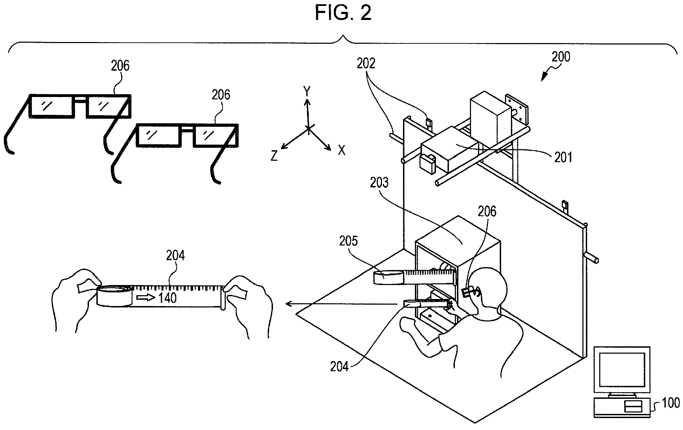

The second method allows the user to intuitively and quickly measure. However, when the user specifies the position of a surface, a specified point may pass through a shape of the surface because of the virtual object. The user has thus difficulty in specifying accurately a desired measurement location. With reference to FIG. 2 as described below, multiple persons may view a virtual object in a review process. In such a case, the visualized virtual object may look different depending on the position of each person, and the measurement location looks different in position to the persons. Which location is being measured is not clear.

In the embodiment, a distance is measured between two points of a virtual tape measure corresponding to two points of a real tape measure applied to a virtual object, in accordance with the correspondence relationship between the initial positions of the real tape measure and the virtual tape measure. In this way, the distance between the two points is measured in an intuitive operation, and the measurement accuracy is increased.

As described in operation (1) of FIG. 1, the digital mockup device 100 stores, on a memory 111, information representing a correspondence relationship between a reference position of a real first measurement device 101, and a reference position of a virtual second measurement device 102 that is able to measure the virtual object 103 and is three-dimensionally visualized in a predetermined space. The virtual object 103 is an object, serving as a measurement target, which is three-dimensionally visualized in the predetermined space. The virtual object 103 is hereinafter simply referred to as an object 103. The object 103 is a device to be measured which is produced and visualized in a simulation space by the 3D CAD or a digital mockup application. The production of the object 103 in the simulation space refers to generation of CAD data. The real first measurement device 101 is a real device, for example. The real first measurement device 101 is hereinafter also referred to as a first measurement device 101. The first measurement device 101 is able to measure length. The virtual second measurement device 102 is a measurement device that is produced and visualized in the simulation space by the 3D CAD or a digital mockup application. The virtual second measurement device 102 is hereinafter also referred to as a second measurement device 102. The reference position is also referred to as an initial position.

The information indicating the correspondence relationship between the initial position of the first measurement device 101 and the initial position of the second measurement device 102 may be stored in coordinates of the two positions as illustrated in FIG. 1. The coordinates of the initial position of the first measurement device 101 may be (100, 100, 100), for example. The coordinates of the initial position of the second measurement device 102 may be (150, 150, 150), for example. The information indicating the correspondence relationship may be a relative value between the initial position of the first measurement device 101 and the initial position of the second measurement device 102. The relative value results from subtracting the coordinates of the initial position of the second measurement device 102 from the coordinates of the initial position of the first measurement device 101, for example.

In operation (2) of FIG. 1, the digital mockup device 100 references the memory 111, and calculates the two end positions of the second measurement device 102 corresponding to the two end positions of the first measurement device 101 applied to the object 103. A user 104 places the first measurement device 101 on the object 103. In this way, the two end positions of the first measurement device 101 are obtained. The two ends of the first measurement device 101 are a base end and a leading end of the first measurement device 101, for example. The two ends of the second measurement device 102 are a base end and a leading end of the second measurement device 102, for example. The coordinates of the base end position of the first measurement device 101 are (300, 300, 300), for example. The leading end position of the first measurement device 101 are (450, 300, 300), for example. The coordinates of the initial position of the first measurement device 101 are (100, 100, 100), as described above. The coordinates of the initial position of the second measurement device 102 are (150, 150, 150), for example.

The digital mockup device 100 calculates the coordinates of the base end position of the second measurement device 102 by adding, to the coordinates of the base end position of the first measurement device 101, difference values between the coordinates of the initial position of the first measurement device 101 and the coordinates of the initial position of the second measurement device 102. For example, the coordinates of the base end position of the second measurement device 102 are (350, 350, 350) which result from adding difference values (50, 50, 50) to (300, 300, 300). The coordinates of the leading end position of the second measurement device 102 are (500, 350, 350) which result from adding difference values (50, 50, 50) to (450, 300, 300).

As described in operation (3) of FIG. 1, the digital mockup device 100 calculates the distance between the two end positions of the second measurement device 102 in accordance with the calculated two end positions of the second measurement device 102. The digital mockup device 100 calculates the distance between the two end positions of the second measurement device 102, based on the coordinates (350, 350, 350) of the base end position of the second measurement device 102 and the coordinates (500, 350, 350) of the leading end position of the second measurement device 102. The distance is 150, for example.

As described in operation (4), the digital mockup device 100 displays the calculated distance. More specifically, the digital mockup device 100 transmits information indicating the calculated distance to the first measurement device 101, and the first measurement device 101 displays the distance indicated by the received information. In this way, the intuitive operation measures the distance between the two points at increased measurement accuracy.

FIG. 2 illustrates a three-dimensional measurement system 200. The three-dimensional measurement system 200 includes a display device 201, a position detecting device 202, a digital mockup device 100, a virtual object 203, a real tape measure 204, a virtual tape measure 205, and 3D glasses 206.

The position detecting device 202 is a position detecting device that is based on motion capturing technique. The position detecting device 202 may be an optical position detecting device, a mechanical position detecting device, a magnetic position detecting device, or Kinect.

The display device 201 three-dimensionally displays an image. The display device 201 three-dimensionally displays the virtual tape measure 205, and the virtual object 203 in a simulation space. The virtual object 203 is an object that is produced on a computer using a 3D CAD or a digital mockup tool.

The real tape measure 204 is the first measurement device 101. The real tape measure 204 is a tape-like measuring device. The real tape measure 204 is a device that the user may actually touch with his or her hand. The virtual tape measure 205 is the second measurement device 102, for example. The virtual tape measure 205 is produced on a computer by the 3D CAD or the digital mockup tool.

The 3D glasses 206 three-dimensionally display an image. The 3D glasses 206 allow an image for the left eye and an image for the right eye to be concurrently viewed, thereby causing the image to three-dimensionally appear.

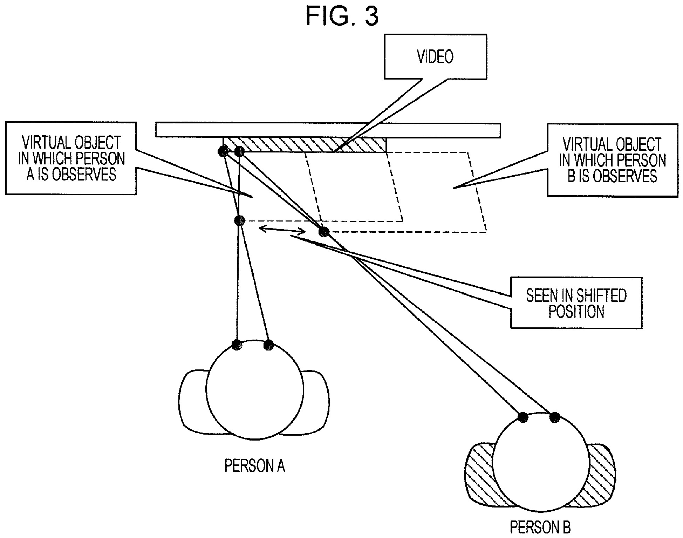

FIG. 3 illustrates a measurement example when a three-dimensional display is observed by multiple persons. Referring to FIG. 3, multiple persons, for example, person A and person B, observe a three-dimensionally displayed object. The three-dimensionally displayed object the person A observes is different from the three-dimensionally displayed object the person B observes. A desired position on the three-dimensionally displayed object that the person A observes and that is specified by the real tape measure 204 is displaced from a position that the person B observes.

By causing the virtual tape measure 205 to be displayed in a manner to keep track of the real tape measure 204, each user determines that a desired position is measured on the three-dimensionally displayed object.

### Hardware Configuration of Digital Mockup Device

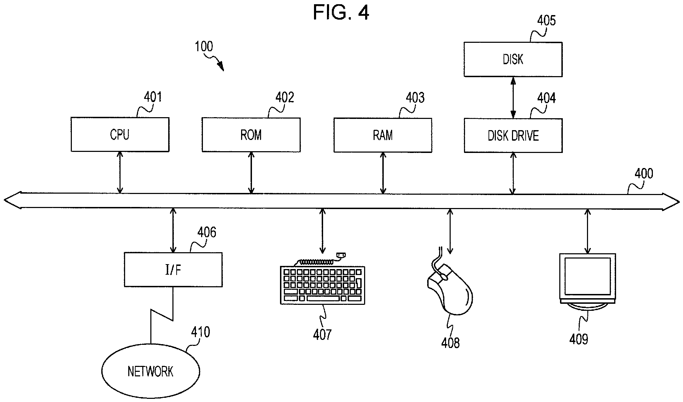

FIG. 4 is a block diagram illustrating a hardware configuration of the digital mockup device 100. The digital mockup device 100 includes but is not limited to a personal computer (PC) or a server.

The digital mockup device 100 includes a central processing unit (CPU) 401, a read-only memory (ROM) 402, and a random-access memory (RAM) 403. The digital mockup device 100 further includes a disk drive 404, a disk 405, an interface 406, a keyboard 407, a mouse 408, and a display 409. The CPU 401, the ROM 402, the RAM 403, the disk drive 404, the interface 406, the keyboard 407, the mouse 408, and the display 409 are interconnected to each other via a bus 400.

The CPU 401 generally controls the digital mockup device 100. The ROM 402 stores programs including a boot program, and a design support program. The RAM 403 is used as a work area for the CPU 401. The disk drive 404, controlled by the CPU 401, controls data reading from and data writing onto the disk 405. The disk 405 stores data that is written under the control of the disk drive 404. The disk 405 may store programs including the design support program (not illustrated), for example. The disk 405 may include a magnetic disk, or an optical disk. The CPU 401 reads the design support program stored on the ROM 402 or the disk 405, and performs a process coded in the design support program.

The interface 406 is connected to a network 410 including a local area network (LAN), a wide area network (WAN), or the Internet via a communication line, and then connected to another device via the network 410. The interface 406 controls interfacing with the network 410, and also controls data receiving from and data outputting to the external device. The interface 406 may be a modem or a LAN adaptor.

The keyboard 407 and the mouse 408 are interfaces that are controlled by a user to receive a variety of data. The display 409 is an interface that outputs data in response to a command from the CPU 401.

The digital mockup device 100 may further include, in addition to the above-described elements, an input device that captures an image or a moving image from a camera, and an input device that captures audio from a microphone. The digital mockup device 100 may further include an output device, such as a printer. The digital mockup device 100 may further include a solid state drive (SSD), and a semiconductor memory.

In accordance with the present embodiment, the hardware configuration of the digital mockup device 100 is a personal computer, for example. The digital mockup device 100 is not limited to the personal computer. The digital mockup device 100 may be a server. If the digital mockup device 100 is a server, a device or the display 409 that is operated by the user may be connected to the digital mockup device 100 via the network 410.

The hardware configuration of the real tape measure 204 is not illustrated. The real tape measure 204 may include a communication device that may perform wireless or wired communication, an output device, such as a display, and a memory that stores a variety of information.

### Functional Configuration Example of Three-dimensional Measurement System

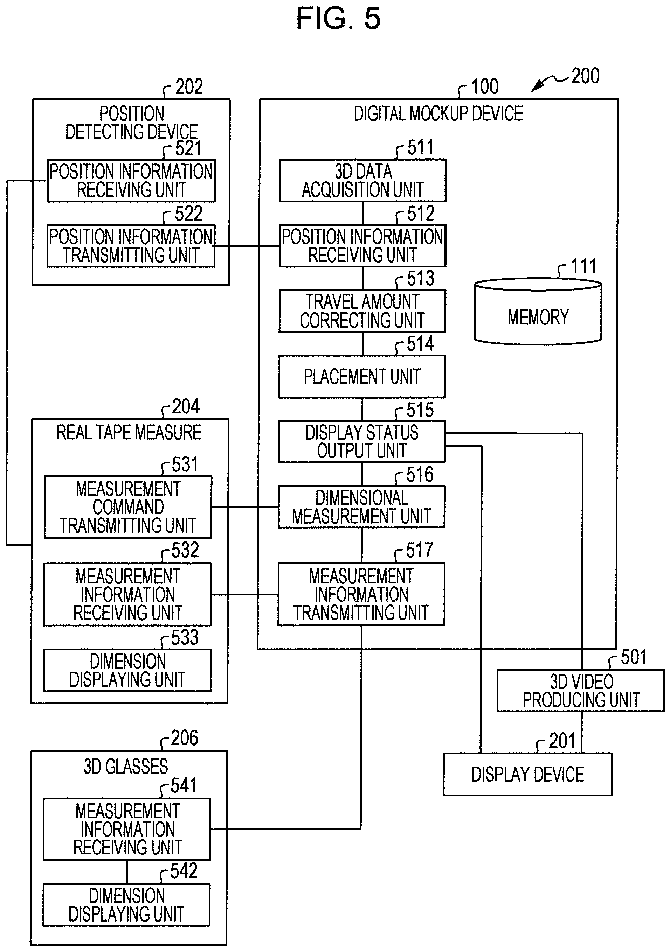

FIG. 5 is a block diagram illustrating a functional configuration of the three-dimensional measurement system 200. The three-dimensional measurement system 200 includes the position detecting device 202, digital mockup device 100, real tape measure 204, 3D glasses 206, 3D video producing unit 501, and display device 201.

The position detecting device 202 includes a position information receiving unit 521, and a position information transmitting unit 522. The real tape measure 204 includes a measurement command transmitting unit 531, a measurement information receiving unit 532, and a dimension displaying unit 533. The 3D glasses 206 include a measurement information receiving unit 541, and a dimension displaying unit 542.

The 3D video producing unit 501 is a computer that produces a three-dimensional video. The function of the 3D video producing unit 501 may be included in a display status output unit 515 of the digital mockup device 100 described below.

The digital mockup device 100 includes a 3D data acquisition unit 511, a position information receiving unit 512, a travel amount correcting unit 513, a placement unit 514, a display status output unit 515, a dimensional measurement unit 516, and a measurement information transmitting unit 517.

The process of each controller in the digital mockup device 100 is coded in the program that is stored on a storage device, such as the ROM 402, the RAM 403, or the disk 405, to be accessed by the CPU 401 of FIG. 4. The CPU 401 reads the program from the storage device, and performs the process coded in the program. The process of each controller is thus performed. The process results of the controller are stored on the storage device, such as the RAM 403, the ROM 402, and the disk 405. The memory 111 is implemented by the storage device, such as the RAM 403, the ROM 402, or the disk 405.

The digital mockup device 100 receives a video size designation of the display device 201 that three-dimensionally displays 3D data. The video size is a video size of a video projected by a projector or a size of a display. The video size may be a predetermined value. The digital mockup device 100 acquires, as the video size, at least the vertical and horizontal lengths of the displayed video, or a screen aspect ratio, and a video screen size. The vertical length of the displayed video is 2020 mm, and the horizontal length of the displayed video is 3230 mm. The screen aspect ratio is 16:10. The video screen size is 150 inches, for example.

The 3D data acquisition unit 511 acquires the 3D data. The 3D data is information that represents an object presented in the simulation space, for example. The acquisition method of the 3D data is not limited to any particular method. The 3D data acquisition unit 511 may read the 3D data from the memory 111 or may acquire the 3D data from another device via the network 410.

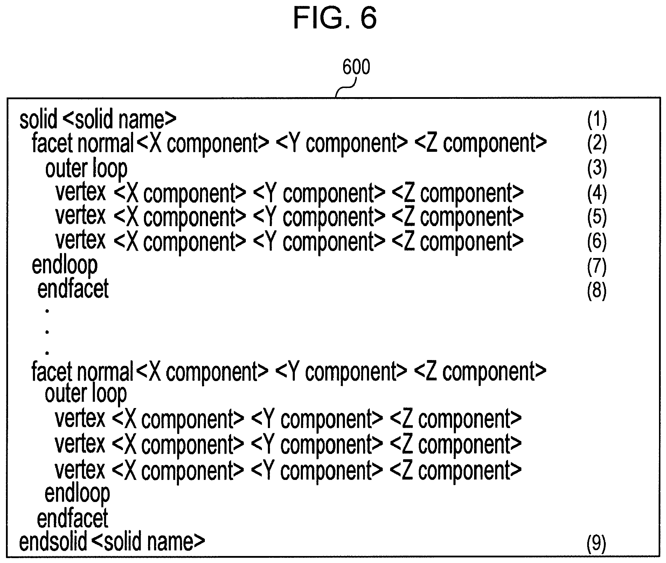

FIG. 6 illustrates a first example of 3D data 600. The 3D data 600 is described in a standard triangulated language (STL) file format. A character string representing the name of a solid is described in line (1) of FIG. 6. Components of a surface normal vector of a triangle are described in line (2) of FIG. 6. A starting symbol of a point included in the triangle is described in line (3) of FIG. 6.

Components of points included in the triangle are described in lines (4) through (6) of FIG. 6. An end symbol of a point included in the triangle is described in line (7) of FIG. 6. An end symbol of a surface of the triangle is described in line (8) of FIG. 6. A symbol ending the solid is described in line (9) of FIG. 6.

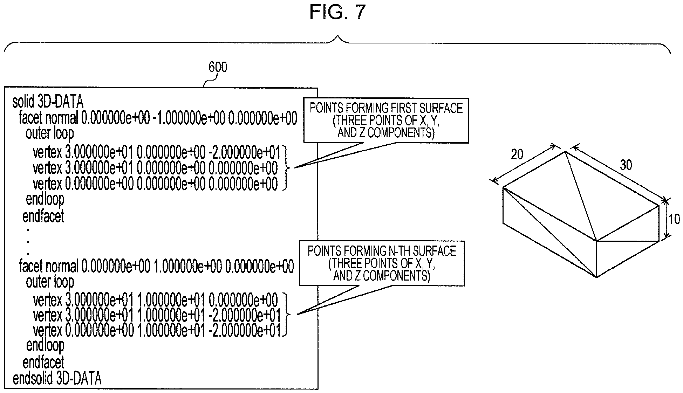

FIG. 7 illustrates a second example of the 3D data 600. FIG. 7 illustrates a rectangular parallelepiped sample model with side lengths X, Y, and Z respectively being 30, 10, and 20. Points included in each surface are described on a per surface basis. Referring to FIG. 7, the 3D data 600 describes points included in a first surface to points included in an N-th surface.

The 3D video producing unit 501 produces a three-dimensional virtual object in accordance with the 3D data 600.

The display device 201 visualizes and displays the virtual object represented by the 3D data 600.

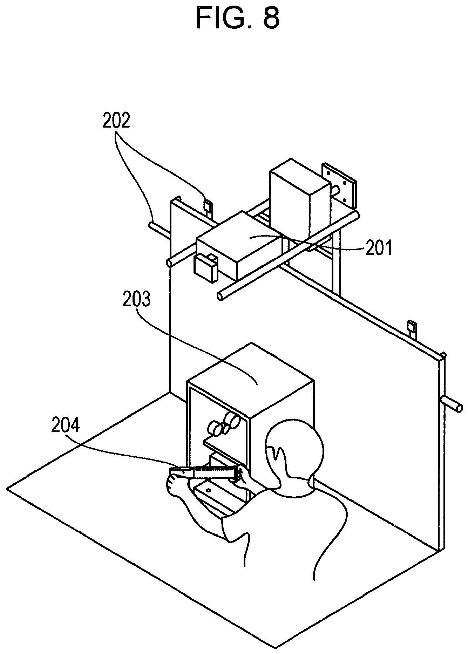

FIG. 8 illustrates a configuration example of an initial position of the real tape measure 204. A user moves the real tape measure 204 to the center or to the vicinity of the center of a screen. The position detecting device 202 detect the position of the real tape measure 204. The position detecting device 202 sets the detected position to be the position of the origin of the real tape measure 204 in a real space. The real tape measure 204 is moved to the center or the vicinity of the center of the screen. The embodiment is not limited to this configuration. The real tape measure 204 may be moved to any location as long as the position detecting device 202 is able to detect the location of the real tape measure 204.

An optical position detection example is described below. The real tape measure 204 includes at the base end and the leading end thereof markers that reflect light. The position detecting device 202 detects the positions and postures of the markers by identifying the markers with at least two cameras from multiple optical cameras. The detected initial position of the real tape measure 204 is described as below.
Initial position of the real tape measure 204: X = 0 mm, Y = 0 mm, and Z = 100 mm

The placement unit 514 stores on the memory 111 information indicating the correspondence relationship between the initial position of the real tape measure 204 and the initial position of the virtual shape, detected by the position detecting device 202. The video size may have a vertical height of 2020 mm, and a horizontal width of 3230 mm. The vertical direction may be a Y direction, and the horizontal direction may be an X direction. If the reference coordinates of the display device 201 is at the bottom right corner, the central position of the screen is described below.
Central position of screen: X = 1615 mm, and Y = 1010 mm

The placement unit 514 calculates the central position of the screen on which the virtual object 203 is displayed. The placement unit 514 then calculates position coordinates of the virtual object 203. The position coordinates of the virtual object 203 are described below.

Position coordinates of the virtual object 203: X = 1000 mm, Y = 1000 mm, and Z = 300 mm

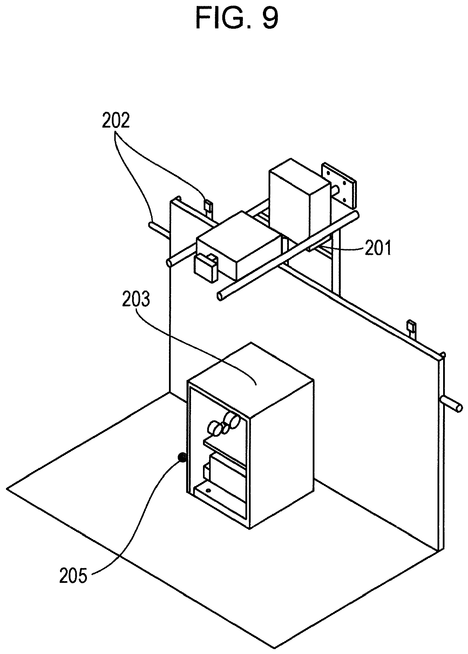

FIG. 9 illustrates a configuration example of the initial position of the virtual tape measure 205. The placement unit 514 sets the position coordinates of the virtual object 203 to be the initial position of the virtual tape measure 205. The initial position of the virtual tape measure 205 is described below.
Initial position of the virtual tape measure 205: X = 1000 mm, Y = 1000 mm, and Z = 300 mm

The placement unit 514 stores on the memory 111 information indicating the correspondence relationship between the initial position of the real tape measure 204 and the initial position of the virtual tape measure 205. More specifically, the placement unit 514 calculates a relative value between the initial position of the real tape measure 204 and the initial position of the virtual tape measure 205. The placement unit 514 stores the calculated relative values on the memory 111. The relative values are described below.
Relative values: X = 1000 mm, Y = 1000 mm, and Z = 200 mm

The display status output unit 515 causes the user to specify a display scale of the virtual object 203 to be displayed. The display status output unit 515 may set a parameter in advance so that scaling is adjustable in view of the size of the virtual object 203.

If the displaying is performed at a set size in the simulation space, the display status output unit 515 stores "1" as a scale value. The display status output unit 515 may receive the scale value of the virtual object 203 in response to the operation of an input device, such as the mouse 408, by the user.

If "1.2" is input, for example, the display status output unit 515 stores "1.2" as the scale value.

The display status output unit 515 changes the display scale of the virtual object 203 in response to the scale value. Although the display status output unit 515 expands or contracts a view during displaying, the display status output unit 515 may change the display scale by directly changing the size of the virtual object 203 in the simulation space.

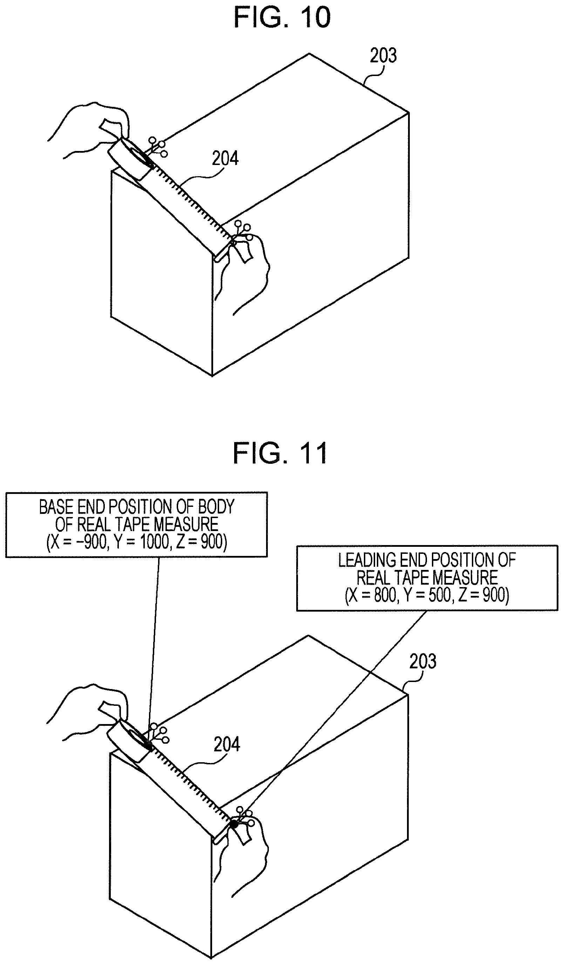

FIG. 10 illustrates a measurement example by the real tape measure 204. The user may command the real tape measure 204 to measure. The measurement command may be issued by some kind of operation, such as pressing a button disposed on the real tape measure 204. The measurement command may be issued using an input device, such as the keyboard 407 or the mouse 408 of the digital mockup device 100. The measurement command transmitting unit 531 transmits to the digital mockup device 100 the measurement command that has been received.

FIG. 11 illustrates a position example of two ends of the real tape measure 204. The position detecting device 202 detects the positions of the base end and the leading end of the body of the real tape measure 204. The position information transmitting unit 522 in the position detecting device 202 transmits to the digital mockup device 100 the detected coordinates of each position and the posture.

The transmission intervals of the position information are not limited to any particular values but depend on the function of the position detecting device 202. The coordinates representing the positions and angles representing the postures are described below.
Base end position of the real tape measure 204: X = -900 mm, Y = 1000 mm, and Z = 900 mm
Base end angle of the real tape measure 204: X = 0°, Y = 0°, and Z = 0° Leading end position of the real tape measure 204: X = 800 mm, Y = 500 mm, and Z = 900 mm
Leading end angle of the real tape measure 204: X = 0°, Y = 0°, and Z = 0°

The position information receiving unit 512 receives from the position detecting device 202 information indicating the base end position, the base end angle, the leading end position, and the leading end angle.

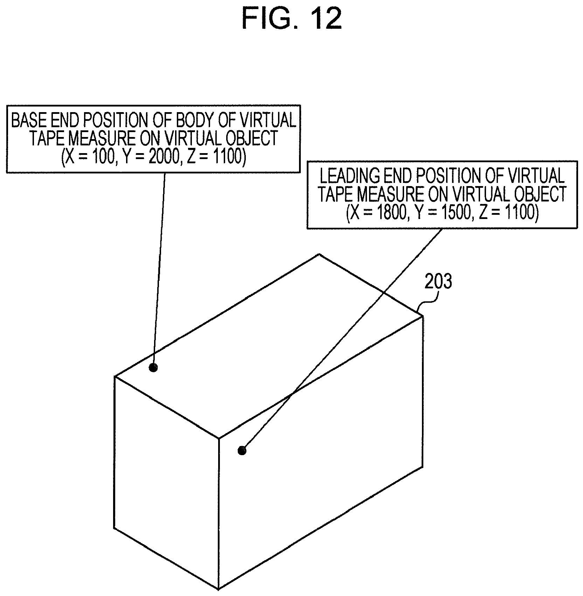

FIG. 12 illustrates a position example of two ends of the virtual tape measure 205. The travel amount correcting unit 513 calculates the position of the virtual tape measure 205 from the position of the real tape measure 204 and the scale value. If the scale value is 1, the travel amount correcting unit 513 calculates the position of the virtual tape measure 205 by adding the relative values to the coordinates of the real tape measure 204. As described above, the relative values are X = 1000 mm, Y = 1000 mm, and Z = 200 mm.
Base end position of the body of the virtual tape measure 205: X = 100 mm, Y = 2000 mm, and Z = 1100 mm
Base end angle of the body of the virtual tape measure 205: X = 0°, Y = 0°, and Z = 0°
Leading end position of the virtual tape measure 205: X = 1800 mm, Y = 1500 mm, and Z = 1100 mm
Leading end angle of the virtual tape measure 205: X = 0°, Y = 0°, and Z = 0°

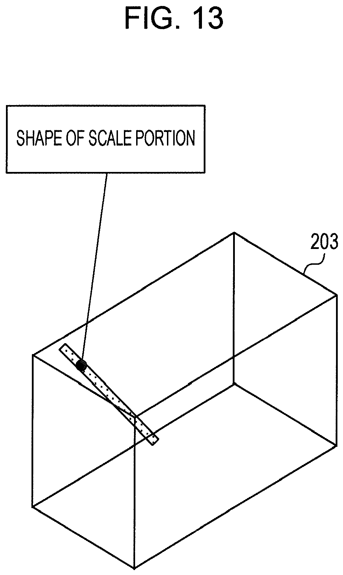

FIG. 13 illustrates a layout example of the shape of a scale portion. The placement unit 514 generates in the simulation space a rectangular parallelepiped that serves as a scale portion that connects the base end to the leading end of the body of the virtual tape measure 205. In the example of FIG. 13, the shape that connects the base end of the body of the virtual tape measure 205 to the leading end of the body of the virtual tape measure 205 is linear, but the base end and the leading end may be connected in a predetermined method, for example, using a curved shape.

More specifically, the placement unit 514 generates a shape corresponding to the scale portion of the virtual tape measure 205 so that the position represented by coordinates X = 100 mm, Y = 2000 mm, and Z = 1000 mm is connected to the position represented by coordinates X = 1800 mm, Y = 1500 mm, and Z = 1100 mm. It is assumed herein that the shape of the scale portion of the virtual tape measure 205 is set as described below.
Width of scale portion: 10 mm, thickness of scale portion: 1 mm
Shape of scale portion: rectangular parallelepiped having size of 10 mm x 1 mm x 1722 mm

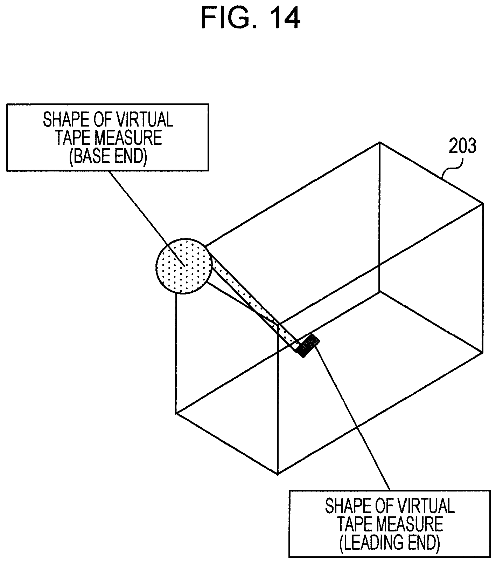

FIG. 14 illustrates a production example of the shape of the virtual tape measure 205. The placement unit 514 places the shape of the base end of the virtual tape measure 205 produced in advance at the position of X = 100 mm, Y = 2000 mm, and Z = 1100 mm to adjust the posture of the virtual tape measure 205. In accordance with the embodiment, the placement of the virtual tape measure 205 by the placement unit 514 means the placement of the virtual tape measure 205 in the simulation space. The placement of the virtual tape measure 205 in the simulation space refers to modifying the 3D data 600 or producing new 3D data 600.

The placement unit 514 places the shape of the leading end of the virtual tape measure 205 that is produced in advance at the position of X = 1800 mm, Y = 1500 mm, and Z = 1100 mm to adjust the posture of the virtual tape measure 205. The leading end of the virtual tape measure 205 that is produced in advance refers to storing on the memory 111 the virtual tape measure 205 as the 3D data 600 in advance.

The placement unit 514 places the scale portion of the virtual tape measure 205 at the position of X = 100 mm, Y = 2000 mm, and Z = 1100 mm to adjust the posture of the virtual tape measure 205.

The travel amount correcting unit 513 corrects at least one of the two end positions of the virtual tape measure 205 corresponding to the two end positions of the real tape measure 204 applied to the virtual object 203 so that at least one of the two end positions is at a position of a specified shape of the virtual object 203. The position of the specified shape includes at least one of a position of one of surfaces of the virtual object 203, a center position of one of the surfaces of the virtual object 203, a position on a boundary between surfaces of the virtual object 203, a position of an end point of the boundary between the surfaces of the virtual object, and a position of an apex of the virtual object 203.

The position of one of the surfaces of the virtual object 203 is also referred to as an on-surface position. The center position of one of the surfaces of the virtual object 203 is also referred to as a center of the surface. The position on the boundary between the surfaces of the virtual object 203 is also referred to as an on-edge position. The position of the end point of the boundary between the surfaces is also referred to as an end point of an edge. The position of the apex of the virtual object 203 is also simply referred to as an apex.

The travel amount correcting unit 513 receives a command as to whether to change the measurement location in response to a shape attribute. For example, the travel amount correcting unit 513 receives a designation of the shape attribute of the base end and the leading end of the virtual tape measure 205 in response to a user operation.

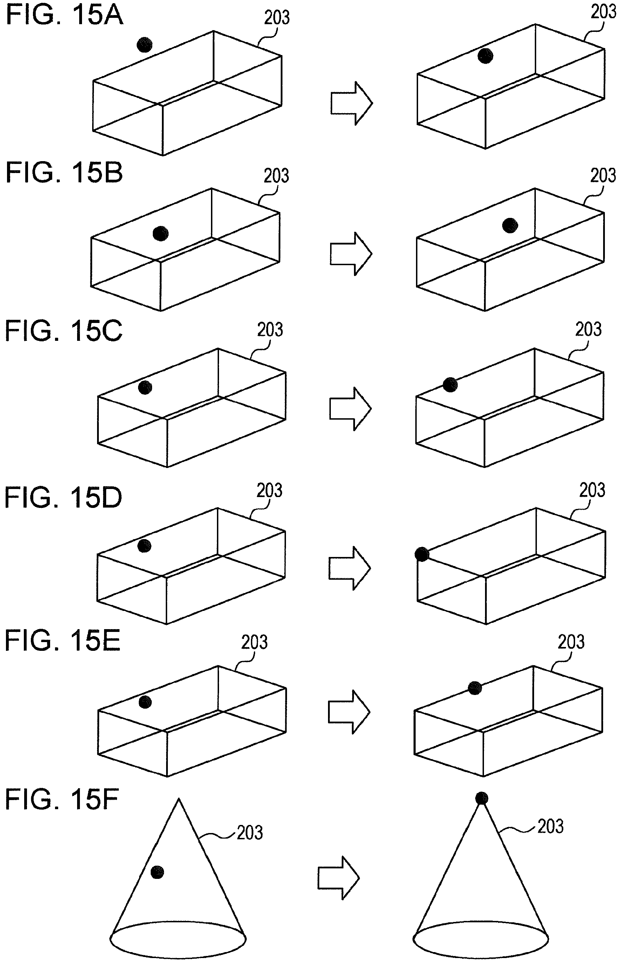

FIG. 15A through FIG. 15F illustrate shape attribute examples. The travel amount correcting unit 513 shifts the base end position or the leading end position of the virtual tape measure 205 in response to the type of shape attribute.

FIG. 15A indicates an example of the "on-surface position" as the shape attribute. If the shape attribute is the "on-surface position", the travel amount correcting unit 513 moves the position of the virtual tape measure 205 to a point on the same surface or on the same curved surface. The position of the virtual tape measure 205 means the base end position of the body of the virtual tape measure 205 or the leading end position of the body of the virtual tape measure 205. Even if the pointed position is outside the object as illustrated in FIG. 15A, the travel amount correcting unit 513 moves the position onto the surface of the object.

FIG. 15B illustrates an example of the "center of the surface" as the shape attribute. If the shape attribute is the "center of the surface", the travel amount correcting unit 513 moves the position of the virtual tape measure 205 to the center point of the same surface or the same curved surface. Even if the position of the virtual tape measure 205 is at any position on the surface of the object, the travel amount correcting unit 513 moves the position of the virtual tape measure 205 to the center position of the surface as illustrated in FIG. 15B. If the center position of the surface is not uniquely determined, the center position may be the center position of the maximum circle circumscribing the surface shape.

FIG. 15C illustrates an example of the "on-edge position" as the shape attribute. If the shape attribute is the "on-edge position", the travel amount correcting unit 513 moves the position of the virtual tape measure 205 to a point on a straight line or a curved line of the boundary between the surfaces. The position of the virtual tape measure 205 is on the surface of the object as illustrated in FIG. 15C, and the travel amount correcting unit 513 moves the position of the virtual tape measure 205 to a point on the edge between the surfaces.

FIG. 15D illustrates an example of an "edge end point" as the shape attribute. If the shape attribute is the "edge end point", the travel amount correcting unit 513 moves the position of the virtual tape measure 205 to a start point or an end point of a straight line or a curved line of the boundary between the surfaces. When the start point or the end point of the edge is selected, the travel amount correcting unit 513 selects one of the start point and the end point whichever is closer to the original position of the virtual tape measure 205. If the distances to the start point and the end points are equal, the travel amount correcting unit 513 may select the start point. For example, when the position of the virtual tape measure 205 is on the top surface of the object as illustrated in FIG. 15D, the travel amount correcting unit 513 moves the position of the virtual tape measure 205 to the start point of the straight line between the surfaces.

FIG. 15E illustrates an example of an "edge center point" as the shape attribute. If the shape attribute is the "edge center point", the travel amount correcting unit 513 moves the position of the virtual tape measure 205 to the center point of the straight line or the curved line along the boundary between the surfaces. For example, when the position of the virtual tape measure 205 is on a point on the top surface of the object as illustrated in FIG. 15E, the travel amount correcting unit 513 moves the position of the virtual tape measure 205 to the center position of the straight line along the boundary between the surfaces.

FIG. 15F illustrates an example of an apex as the shape attribute. If the shape attribute is the apex, the travel amount correcting unit 513 moves the position of the virtual tape measure 205 to a point on the boundary included in the surface. The apex is applied to a shape, such as a cone, in which the shape of the virtual object 203 converges to a single point as illustrated in FIG. 15F.

The travel amount correcting unit 513 changes the base end position and the leading end position of the body of the virtual tape measure 205 in response to the specified shape attribute.

If a shape attribute is specified, the travel amount correcting unit 513 moves the base end position and the leading end position of the body of the virtual tape measure 205 to a point of a shape closest thereto. The travel amount correcting unit 513 produces a sphere centered at coordinates of the base end or the leading end of the body of the virtual tape measure 205, and expands the sphere. A point where the sphere meets the shape in the course of expansion is set to be the location to which the base end or the leading end of the body is moved.

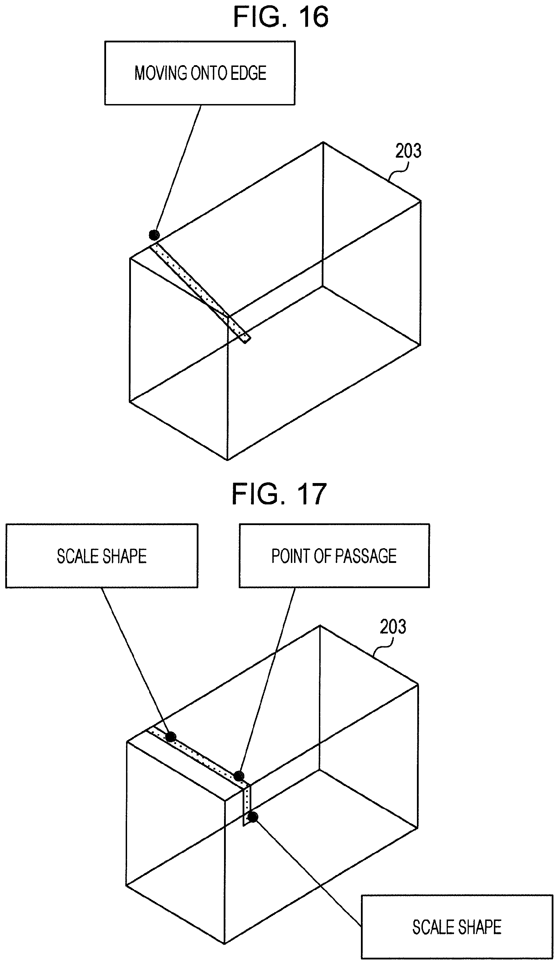

FIG. 16 illustrates an example in which an above-edge point is specified as a shape attribute. In this case, the shape attribute of the base end of the body of the virtual tape measure 205 is specified as the "over-edge point", and the shape attribute of the leading end of the virtual tape measure 205 is not specified.

The travel amount correcting unit 513 moves the base end position of the virtual tape measure 205 to a point above the edge.
Base end position of the body of the virtual tape measure 205: X = 0 mm, Y = 2000 mm, and Z = 1100 mm
Base end angle of the body of the virtual tape measure 205: X = 0°, Y = 0°, and Z = 0°
Base end position of the body of the virtual tape measure 205: X = 1800 mm, Y = 1500 mm, and Z = 1100 mm
Leading end angle of the body of the virtual tape measure 205: X = 0°, Y = 0°, and Z = 0°

The placement unit 514 disposes at a changed position a rectangular parallelepiped that connects the base end to the leading end of the virtual tape measure 205. More specifically, the placement unit 514 produces the rectangular parallelepiped corresponding to the scale of the virtual tape measure 205 so that the position of X = 0 mm, Y = 2000 mm, and Z = 1100 mm is connected to the position of X = 1800 mm, Y = 1500 mm, and Z = 1100 mm.
Shape of the scale portion: Rectangular parallelepiped of 10 mm x 1 mm x 1868.15 mm

The placement unit 514 places the base end of the pre-produced virtual tape measure 205 at the position of X = 0 mm, Y = 2000 mm, and Z = 1100 mm, to adjust the posture of the virtual tape measure 205. The placement unit 514 places the leading end of the pre-produced virtual tape measure 205 at the position of X = 1800 mm, Y = 1500 mm, and Z = 1100 mm to adjust the posture of the virtual tape measure 205. The placement unit 514 further places the scale portion of the pre-produced virtual tape measure 205 at the position of X = 0 mm, Y = 2000 mm, and Z = 1100 mm to adjust the posture of the scale portion.

If a point is specified between a first end portion and a second end portion of the virtual tape measure 205, the dimensional measurement unit 516 calculates the distance extending from the first end portion to the second end portion via the specified point. The specified point is also referred to as a point of passage. The first end portion is the base end of the virtual tape measure 205, for example. The second end portion is the leading end of the virtual tape measure 205, for example.

More specifically, the travel amount correcting unit 513 instructs whether the user is to specify the point of passage between the base end and the leading end of the virtual tape measure 205.

FIG. 17 illustrates an example in which a point of passage is specified. The user specifies the point of passage between the base end and the leading end of the virtual tape measure 205. The point of passage may be specified using a device, such as the real tape measure 204 or the mouse 408.

In the following example, the point of passage is specified using the real tape measure 204. The position information receiving unit 521 detects the position of the real tape measure 204. For example, the position of the real tape measure 204 is as follows:
Position specified using the real tape measure 204: X = 800 mm, Y = 1000 mm, and Z = 900 mm.

The position information transmitting unit 522 transmits to the digital mockup device 100 position information indicating the position of the real tape measure 204. The position information receiving unit 512 receives the position information indicating the position of the real tape measure 204. The travel amount correcting unit 513 calculates the position of the point of passage on the virtual object 203 in accordance with the position indicated by the position information received by the position information receiving unit 512.
Position of the point of passage: X = 1800 mm, Y = 2000 mm, and Z = 1100 mm

The travel amount correcting unit 513 produces on the virtual object 203 a rectangular parallelepiped that connects the base end, the point of passage, and the leading end of the body of the virtual tape measure 205. For example, the travel amount correcting unit 513 produces the shape corresponding to the scale of the virtual tape measure 205 such that the position of X = 0 mm, Y = 2000 mm, and Z = 1100 mm is connected to the point of passage of X = 1800 mm, Y = 2000 mm, and Z = 1100 mm.

The travel amount correcting unit 513 also produces the shape corresponding to the scale of the virtual tape measure 205 such that the position of X = 1800 mm, Y = 2000 mm, and Z = 1100 mm is connected to the point of passage of X = 1800 mm, Y = 2000 mm, and Z = 1100 mm as listed below.
Shape of the scale portion: Rectangular parallelepiped of 10 mm x 1 mm x 1800 mm
Shape of the scale portion: Rectangular parallelepiped of 10 mm x 1 mm x 500 mm

The shape of the scale portion is divided into two rectangular parallelepipeds. Alternatively, the scale portion may be represented by a single rectangular parallelepiped.

The placement unit 514 places the base end of the pre-produced virtual tape measure 205 at the position of X = 0 mm, Y = 2000 mm, and Z = 1100 mm, to adjust the posture of the virtual tape measure 205. The placement unit 514 places the leading end of the pre-produced virtual tape measure 205 at the position of X = 1800 mm, Y = 1500 mm, and Z = 1100 mm to adjust the posture of the virtual tape measure 205. The placement unit 514 further places the scale portion of the pre-produced virtual tape measure 205.

The placement unit 514 calculates the two end positions of the second measurement device 102 corresponding to the two end positions of the first measurement device 101 applied to the object 103. The dimensional measurement unit 516 calculates the distance between the two end positions of the second measurement device 102.

The dimensional measurement unit 516 may calculate the distance between the two end positions by calculating the total length of the shapes of the scale portions.
Total length of the shapes of the scale portions: 1800 mm + 500 mm = 2300 mm

Alternatively, the dimensional measurement unit 516 may calculate the distance by coordinates.

The measurement information transmitting unit 517 transmits the measurement results to the real tape measure 204. The transmission method includes, but is not limited to, wired transmission or wireless transmission.

The user then specifies to the real tape measure 204 whether scale marks are displayed on the scale portion of the real tape measure 204.

The dimension displaying unit 533 acquires a predefined interval between scale marks and the number of scale marks. The scale mark interval is 10 mm, for example. The number of scale marks is 70, for example.

The dimension displaying unit 533 may define the scale mark interval in response to the measurement results, and dynamically change the scale mark interval in response to the measurement results. For example, the number of scale marks may be defined in view of the size of the virtual tape measure 205, and dynamically changed. Alternatively, the user may directly specify the scale mark interval and the number of scale marks to the real tape measure 204.

The dimension displaying unit 533 sets the information related to the real tape measure 204 to be 70 scale marks at scale mark intervals of 10 mm at a size of 2300 mm.

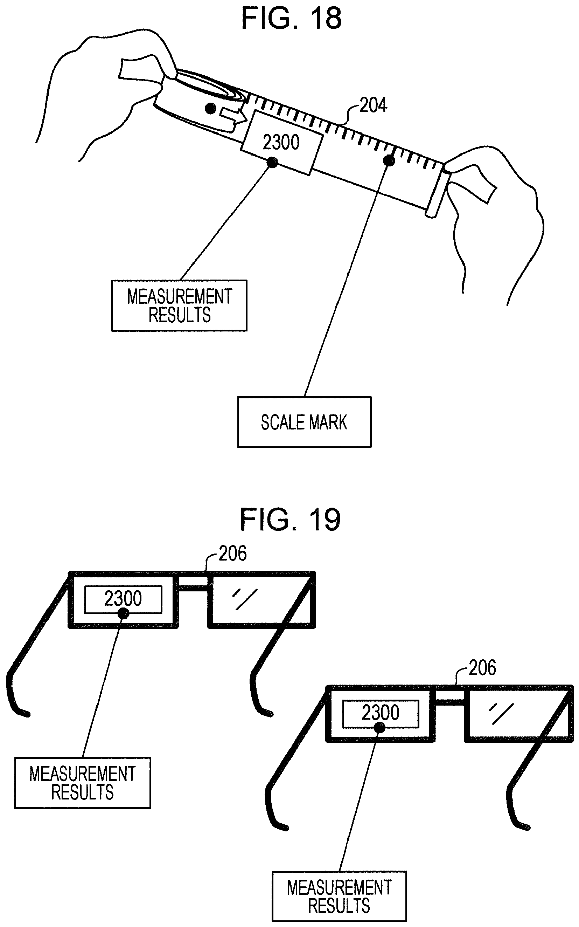

FIG. 18 illustrates an example in which measurement results are displayed on the real tape measure. The dimension displaying unit 533 displays the scale marks and the measurement results in response to information displayed on the set real tape measure 204. Referring to FIG. 18, the dimension displaying unit 533 displays the measurement results on the scale portion. The dimension displaying unit 533 may be projected by the projector of the real tape measure 204, or the scale portion may be a display, or an electronic paper.

FIG. 19 illustrates an example in which the measurement results are displayed on a wearable device. The user specifies to the digital mockup device 100 whether to display the measurement results on the 3D glasses 206. When the digital mockup device 100 receives a command to display the measurement results on the 3D glasses 206, the measurement information transmitting unit 517 transmits the measurement results to the 3D glasses 206.

The measurement information receiving unit 541 in the 3D glasses 206 receives the measurement results. The dimension displaying unit 542 in the 3D glasses 206 displays the measurement results.

### Measurement Process Example by Three-dimensional Measurement System

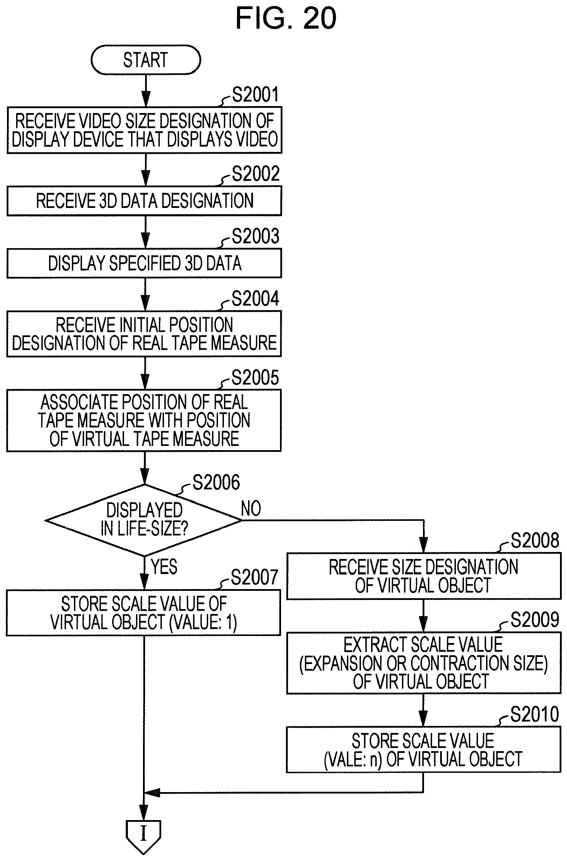

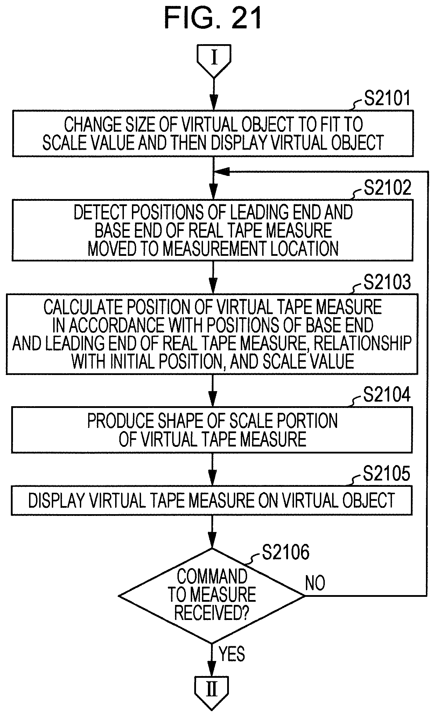

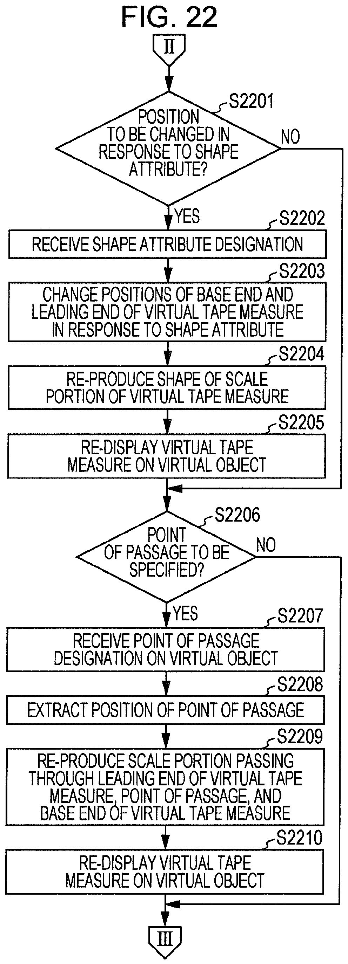

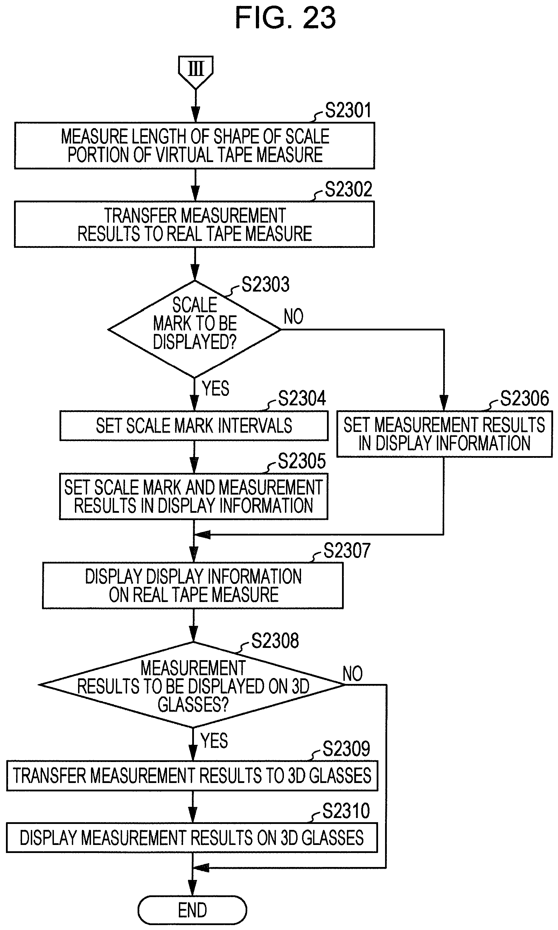

FIG. 20 through FIG. 23 are flowcharts illustrating the measurement process of the three-dimensional measurement system. The digital mockup device 100 receives a video size designation of the display device 201 that displays video (operation S2001). The digital mockup device 100 receives a 3D data 600 designation (operation S2002).

The digital mockup device 100 displays the designated 3D data 600 (operation S2003). The digital mockup device 100 receives an initial position designation of the real tape measure 204 (operation S2004). The digital mockup device 100 stores the position of the real tape measure 204 and the position of the virtual tape measure 205 in association with each other (operation S2005).

The digital mockup device 100 determines whether the virtual object 203 is to be displayed in life size (operation S2006). If the virtual object 203 is determined to be displayed in life size (yes branch from operation S2006), the digital mockup device 100 stores the scale value of the virtual object 203 (operation S2007), and then proceeds to operation S2101. The scale value is the magnitude of scale expansion or scale contraction. The scale value in operation S2007 is "1".

If the virtual object 203 is not displayed in life size (no branch from operation S2006), the digital mockup device 100 receives a size designation of the virtual object 203 (operation S2008). The digital mockup device 100 extracts the scale value of the virtual object 203 (operation S2009). The digital mockup device 100 stores the scale value of the virtual object 203 (operation S2010), and then proceeds to step S2101. The scale value in operation S2010 is n.

The display device 201 modifies the size of the virtual object 203 to meet the scale value (operation S2101). The position detecting device 202 detects the base end position and the leading end position of the real tape measure 204 that has been moved to the measurement location (operation S2102).

The digital mockup device 100 calculates the position of the virtual tape measure 205 in accordance with the detected base end position and leading end position of the real tape measure 204, the correspondence relationship with respect to the initial positions, and the scale value (operation S2103). The digital mockup device 100 produces the shape of the scale portion of the virtual tape measure 205 (operation S2104).

The digital mockup device 100 displays the virtual tape measure 205 on the virtual object 203 visualized in a predetermined space (operation S2105). The digital mockup device 100 determines whether a command to measure has been received (operation S2106). If it is determined that the command to measure has not been received (no branch from operation S2106), the digital mockup device 100 returns to operation S2102.

If it is determined that the command to measure has been received (yes branch from operation S2106), the digital mockup device 100 determines whether the position is to be changed in response to the shape attribute (operation S2201). If it is determined that the position is not to be changed in response to the shape attribute (no branch from operation S2201), the digital mockup device 100 proceeds to operation S2206.

If it is determined that the position is to be changed in response to the shape attribute (yes branch from operation S2201), the digital mockup device 100 receives a shape attribute designation (operation S2202). The digital mockup device 100 changes the base end position and the leading end position of the virtual tape measure 205 in response to the shape attribute (operation S2203). The digital mockup device 100 re-produces the shape of the scale portion of the virtual tape measure 205 (operation S2204).

The display device 201 re-displays the virtual tape measure 205 on the virtual object 203 (operation S2205). The digital mockup device 100 determines whether to specify the point of passage (step S2206). If it is determined that the point of passage is not to be specified (no branch from operation S2206), the digital mockup device 100 proceeds to operation S2301.

If it is determined that the point of passage is to be specified (yes branch from operation S2206), the digital mockup device 100 receives the point of passage designation on the virtual object 203 (operation S2207). The digital mockup device 100 extracts the position of the point of passage (operation S2208). The digital mockup device 100 re-produces the shape of the scale portion that extends from the leading end of the virtual tape measure 205 to the point of passage to the base end of the virtual tape measure 205 (operation S2209). The digital mockup device 100 re-displays the virtual tape measure 205 on the virtual object 203 (operation S2210).

The digital mockup device 100 measures the length of the shape of the scale portion of the virtual tape measure 205 (operation S2301). The digital mockup device 100 transfers the measurement results to the real tape measure 204 (operation S2302). The digital mockup device 100 determines whether to display the scale marks (operation S2303). If it is determined that the scale marks are not to be displayed (no branch from operation S2303), the real tape measure 204 sets the measurement results in display information (operation S2306).

If it is determined that the scale marks are to be displayed (yes branch from operation S2303), the real tape measure 204 sets the interval between the scale marks (operation S2304). The real tape measure 204 sets the scale marks and the measurement results in the display information (operation S2305). The real tape measure 204 displays the display information on the real tape measure 204 (operation S2307).

The digital mockup device 100 determines whether to display the measurement results on the 3D glasses 206 (operation S2308). If the digital mockup device 100 determines not to display the measurement results on the 3D glasses 206 (no branch from operation S2308), the digital mockup device 100 completes the series of operations. If the digital mockup device 100 determines to display the measurement results on the 3D glasses 206 (yes branch from operation S2308), the digital mockup device 100 transfers the measurement results to the 3D glasses 206 (operation S2309). The 3D glasses 206 displays the measurement results thereon (operation S2310). The digital mockup device 100 completes the series of operations.

As described above, the digital mockup device 100 measures the distance between the two end positions of the virtual tape measure 205 corresponding to the two end positions of the real tape measure 204 applied to the virtual object 203, based the correspondence relationship between the initial position of the real tape measure 204 and the initial position of the virtual tape measure 205. In this way, the distance is measured intuitively and accurately. When multiple persons share information in a product review while observing the virtual object, an operation that is applicable to a real object is possible on a virtual object. The product review using the virtual object may be performed in a sense similar to the sense in which the real object is operated.

The virtual tape measure 205 may select whether to visualization is three-dimensionally performed in a predetermined space. Switching between displaying the virtual tape measure 205 or not displaying the virtual tape measure 205 is performed depending on the measurement operation situation, for example, depending on whether a single person or multiple persons perform measurement. User-friendliness is thus improved.

The digital mockup device 100 displays the calculated distance on the real tape measure 204. In this way, the measurement results are easily recognized using the real tape measure 204 held by the user.

The digital mockup device 100 displays the calculated distance on the 3D glasses 206. The measurement results are easily recognized when the product review is performed by multiple persons.

When the virtual object 203 is three-dimensionally visualized in a predetermined space, the digital mockup device 100 visualizes the virtual object 203 at a specified magnification, and calculates the two end positions of the virtual tape measure 205 at the specified magnification. If the virtual object 203 is visualized with the scale value varied for scale expansion or contraction, the distance responsive to the scale value results.

The digital mockup device 100 corrects the position of the virtual tape measure 205 in response to the specified shape attribute. The position of the specified shape includes at least one of a position of one of surfaces of the virtual object 203, a center position of one of the surfaces of the virtual object 203, a position on a boundary between surfaces of the virtual object 203, a position of an end point of the boundary between the surfaces of the virtual object, and a position of an apex of the virtual object 203. In this way, even if the user is unable to align the real tape measure 204 with the virtual object, the target position is corrected. Measurement accuracy of the distance is thus increased.

The digital mockup device 100 calculates the distance that extends from the base end of the virtual tape measure 205 to the leading end of the virtual tape measure 205 via the specified point. The virtual object is thus measured as if the real object is measured.

The digital mockup device 100 produces the scale when the virtual tape measure 205 is displayed. This causes the measurement to look like a real object is measured using a real tape measure. The distance is thus intuitively measured.

The three-dimensional measurement method described with reference to the embodiment is performed by causing a computer, such as a personal computer or a workstation, to execute a three-dimensional measurement program prepared in advance. The three-dimensional measurement program is stored on computer readable recording media, including a magnetic disk, an optical disk, and a universal serial bus (USB) flash memory, and is read by the computer to be executed. The three-dimensional measurement program may be distributed via a network, such as the Internet.

## Claims

1. A three-dimensional measurement program that causes a computer to execute a procedure, the procedure comprising:
storing, on a memory, information for representing a correspondence between a reference position of a real first measurement device that is present in a predetermined space, and a reference position of a virtual second measurement device that is three-dimensionally visualized in the predetermined space and is able to measure a virtual object that is three-dimensionally visualized in the predetermined space;
calculating two end positions of the virtual second measurement device corresponding to two end positions of the real first measurement device applied to the virtual object, by referencing the information stored on the memory;
calculating a distance between the two ends of the virtual second measurement device, based on the two end positions of the virtual second measurement device calculated; and
displaying, on a predetermined device, the distance calculated.

2. The three-dimensional measurement program according to claim 1,
wherein whether or not the virtual second measurement device is to be three-dimensionally visualized in the predetermined space is selectable.

3. The three-dimensional measurement program according to one of claims 1 and 2,
wherein the predetermined device is the real first measurement device.

4. The three-dimensional measurement program according to one of claims 1 to 3,
wherein the predetermined device is a wearable device.

5. The three-dimensional measurement program according to one of claims 1 to 4, the procedure further comprising:
visualizing the virtual object at a specified magnification when the virtual object is three-dimensionally visualized in the predetermined space,
wherein the two end positions of the virtual second measurement device corresponding to the two end positions of the real first measurement device are calculated, based on the information stored on the memory and the specified magnification.

6. The three-dimensional measurement program according to one of claims 1 to 5, the procedure further comprising:
correcting at least one of the two end positions of the virtual second measurement device corresponding to the two end positions of the real first measurement device applied to the virtual object so that the at least one of the two end positions is at a position of a specified shape of the virtual object,
wherein the two end positions of the virtual second measurement device corresponding to the two end positions of the real first measurement device are calculated, based on the at least one of the two end positions corrected.

7. The three-dimensional measurement program according to claim 6,
wherein the position of the specified shape includes at least one of a position of one of surfaces of the virtual object, a center position of one of the surfaces of the virtual object, a position on a boundary between surfaces of the virtual object, a position of an end point of the boundary between the surfaces of the virtual object, and a position of an apex of the virtual object.

8. The three-dimensional measurement program according to one of claims 1 to 7,
wherein, when a point is specified between a first end of the two ends of the virtual second measurement device and a second end of the two ends of the virtual second measurement device, the distance between the two ends of the virtual second measurement device is calculated from the first end, via the point specified, to the second end.

9. The three-dimensional measurement program according to one of claims 1 to 8, the procedure further comprises:
in case where the real first measurement device and the virtual second measurement device are tape measures,
generating a scale between the two ends of the virtual second measurement device; and
visualizing the virtual second measurement device including the scale generated.

10. A three-dimensional measurement method comprising:
storing, on a memory, information for representing a correspondence between a reference position of a real first measurement device that is present in a predetermined space, and a reference position of a virtual second measurement device that is three-dimensionally visualized in the predetermined space and is able to measure a virtual object that is three-dimensionally visualized in the predetermined space;
calculating two end positions of the virtual second measurement device corresponding to two end positions of the real first measurement device applied to the virtual object, by referencing the information stored on the memory;
calculating a distance between the two ends of the virtual second measurement device, based on the two end positions of the virtual second measurement device calculated; and
displaying, on a predetermined device, the distance calculated, by a processor.

11. A three-dimensional measurement system comprising:
a real first measurement device configured to be present in a predetermined space;
a display device configured to display a virtual object that is three-dimensionally visualized in the predetermined space and a virtual second measurement device that is three-dimensionally visualized in the predetermined space and is able to measure the virtual object;
a memory on which information for representing a correspondence between a reference position of the real first measurement device and a reference position of the virtual second measurement device is stored; and
a processor coupled to the memory and the processor configured to:
calculate two end positions of the virtual second measurement device corresponding to two end positions of the real first measurement device applied to the virtual object, by referencing the information stored on the memory,
calculate a distance between the two ends of the virtual second measurement device, based on the two end positions of the virtual second measurement device calculated, and
display the distance calculated on the display device.
